# FASCICULE DE BREVET EUROPEEN

(11) **EP 3 495 998 B1**
(45) Date de publication et mention de la délivrance du brevet: **03.01.2024**
(21) Numéro de dépôt: 18210624.5
(22) Date de dépôt: 06.12.2018
(51) Int. Cl.: G06V 10/80, G06V 10/96, G06V 20/59, G06F 18/25

(54) **PROCÉDÉ DE DÉTERMINATION DE L ÉTAT D'UN INDIVIDU À PARTIR DU TRAITEMENT D'IMAGES DE SA TÊTE ET DISPOSITIF ASSOCIÉ**
VERFAHREN ZUR BESTIMMUNG DES ZUSTANDS EINER PERSON ANHAND DER BILDAUFBEREITUNG IHRES KOPFS, UND ENTSPRECHENDE VORRICHTUNG
METHOD FOR DETERMINING THE STATUS OF AN INDIVIDUAL FROM THE IMAGE PROCESSING OF THEIR HEAD AND ASSOCIATED DEVICE

(30) Priorité: 08.12.2017 FR 1761814
(43) Date de publication de la demande: 12.06.2019
(73) Titulaire: Valeo Comfort and Driving Assistance, 94000 Créteil (FR)
(72) Inventeur: MAROUDIS, Pantelis, 94046 Créteil (FR); LANCELLE, Valérie, 94046 Créteil CEDEX (FR); PINOTEAU, Jérémie, 94046 Créteil CEDEX (FR); LAFORET, Nicolas, 94046 Créteil CEDEX (FR)
(74) Mandataire: Delplanque, Arnaud

(56) Documents cités:
- JP-B2- 6 008 045
- US-A1- 2016 272 217

## Description

### DOMAINE TECHNIQUE AUQUEL SE RAPPORTE L'INVENTION

La présente invention concerne de manière générale le domaine du traitement des images.

Elle concerne plus particulièrement un procédé de détermination de l'état d'un individu à partir du traitement d'images de sa tête.

Elle concerne également un dispositif associé destiné à déterminer l'état de l'individu.

### ARRIERE-PLAN TECHNOLOGIQUE

Il est connu, par exemple dans le domaine automobile, de surveiller l'état du conducteur d'un véhicule avec un système d'acquisition et de traitement d'images qui « observe » en temps réel le conducteur, et en particulier sa tête.

Lorsque l'état du conducteur change, par exemple lorsqu'il commence à somnoler ou à s'assoupir, des signaux particuliers peuvent être détectés au niveau de son visage. Par exemple, le conducteur peut cligner des yeux plus souvent ou bien laisser son regard fixé dans une direction autre que celle de la route. De tels signaux peuvent se produire parfois très rapidement, par exemple sur des échelles de temps de quelques dizaines de millisecondes. Aussi, il est nécessaire que la fréquence d'acquisition et surtout la fréquence de traitement des images par le système de surveillance du conducteur soit suffisamment élevée afin de capturer la dynamique de ces signaux et de détecter si un événement spécial a lieu et déduire que le conducteur est dans un état particulier, par exemple un état de somnolence ou de distraction.

Toutefois, il est difficile, avec les systèmes d'acquisition et de traitement actuels, d'augmenter à la fois la fréquence d'acquisition et la fréquence de traitement du système sans augmenter de manière significative les ressources computationnelles allouées au système (ce qui entrainerait un augmentation du coût, de la consommation énergétique et le besoin de dissipation thermique). En effet, il n'est pas rare que la durée de traitement d'une seule image soit supérieure à la durée entre deux acquisitions successives, de sorte qu'il n'est pas possible de traiter toutes les images acquises.

Il existe alors un risque, avec les systèmes d'acquisition et de traitement connus, qu'un événement spécial très rapide (par ex. un clignement d'oeil) ne soit pas détecté par le système et que l'état associé du conducteur (par exemple la somnolence) ne puisse être déterminé correctement et avec un niveau de confiance suffisant.

Le document D1 (US2016/272217) décrit un procédé de détermination d'un état d'un individu à partir de l'acquisition et du traitement d'images de la tête de l'individu. Néanmoins, D1 est muet sur les étapes de traitement d'image de sorte qu'il ne divulgue pas un procédé dans lequel on acquiert des premières et des deuxièmes images et pour lequel deux sous intervalles du deuxième intervalle de traitement sont séparés par le premier intervalle de traitement.

### OBJET DE L'INVENTION

Afin de remédier à l'inconvénient précité de l'état de la technique, la présente invention propose un procédé de détermination de l'état d'un individu à partir du traitement d'images de sa tête qui permet de changer de manière dynamique la fréquence de traitement des images lorsque qu'un événement spécial a lieu.

L'invention est exposée dans le jeu de revendications joint.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un habitacle de véhicule automobile dans lequel est installé un dispositif selon un mode de réalisation préféré de l'invention ;
- la figure 2 est un schéma explicatif du procédé de l'invention mis en oeuvre par le dispositif de la figure 1.

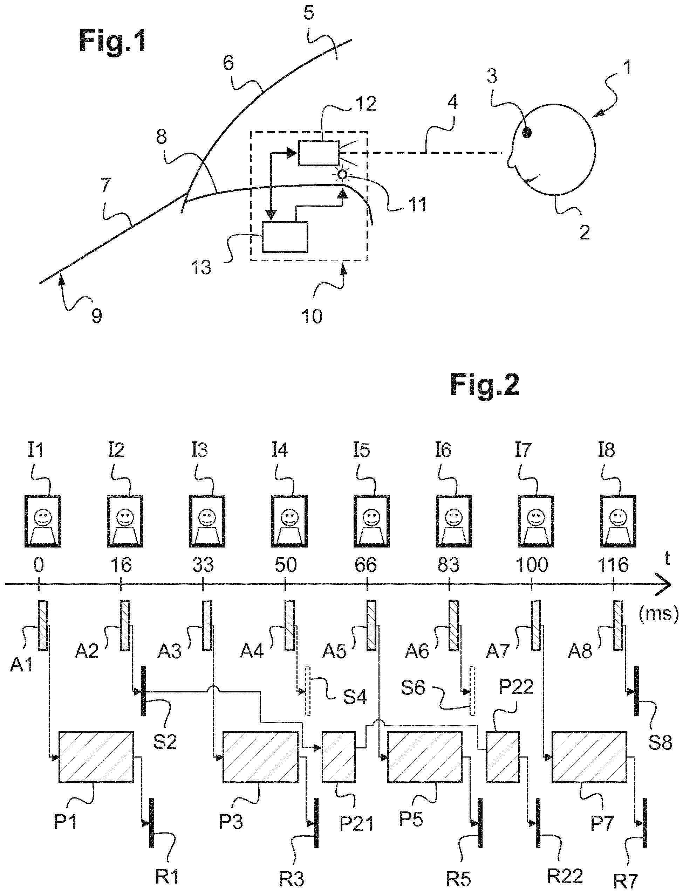

Sur la figure 1, on a représenté un individu - ici le conducteur 1 d'un véhicule automobile 9 - qui est assis à l'intérieur de l'habitacle 5 du véhicule (pare-brise 6 et capot 7), cet habitacle 5 comprenant une planche de bord 8 dans laquelle est installé un dispositif 10 destiné à déterminer l'état du conducteur 1 (somnolence, distraction, état émotionnel).

Dans le mode de réalisation décrit ci-après, le dispositif 10 est ici configuré pour déterminer l'état de somnolence du conducteur 1. Cet état de somnolence peut être déterminé ou détecté grâce à la mesure d'un indicateur tel que, par exemple, le degré d'ouverture des yeux 3 du conducteur 1. La valeur de cet indicateur peut être mesurée par analyse d'images de la tête 2 du conducteur 1, en cherchant dans ces images la localisation des yeux 3 et en calculant une ouverture (par exemple en pourcentage) de la paupière de l'œil 3 ou bien une ouverture moyenne calculée à partir des ouvertures de l'œil gauche et de l'œil droit.

Ainsi, si cette ouverture de paupière présente une valeur inférieure à une valeur minimale prédéterminée égale par exemple à 20%, alors on considère que l'œil est fermé. Au contraire, si cette ouverture de paupière présente une valeur supérieure à une valeur maximale déterminée égale par exemple à 50%, alors on considère que l'œil est ouvert.

Dans d'autres modes de réalisation, l'état de somnolence pourrait être déterminé grâce à un indicateur qui serait la fréquence des bâillements du conducteur. Dans ce cas, on analyse les images de la tête de l'individu pour trouver sa bouche et mesurer, par exemple, le degré d'ouverture de sa bouche.

Dans encore d'autres modes de réalisation, c'est l'état de distraction de l'individu qui peut être déterminé. Le dispositif est alors conçu pour mesurer la direction du regard de l'individu (par exemple en déterminant les reflets cornéens des yeux de l'individu) et détecter si celle-ci est dirigée sur la route ou bien dans une tout autre direction.

Pour déterminer l'état du conducteur 1 à partir du traitement d'images de sa tête 2, le dispositif 10 comporte un système d'acquisition d'images 11, 12 comprenant une source lumineuse 11 et une caméra 12.

La source lumineuse 11 est ici formée par un flash infrarouge, par exemple une diode électroluminescente émettant à une longueur d'onde de 940 nanomètres (proche IR). Cette source lumineuse 11 s'allume et s'éteint périodiquement, de manière à illuminer le visage de l'individu 1, qui est généralement situé à une distance comprise entre 50 et 80 centimètres. Avantageusement, la source lumineuse 11 peut comprendre une optique adaptée pour que le visage de l'individu 1 soit éclairé de manière uniforme.

La caméra 12 est ici positionnée de telle sorte qu'elle fait face à l'individu 1 et vise la tête 2 et les yeux 3 selon l'axe de visée 4. La caméra 12 est ici une caméra infra-rouge comprenant une optique (non représentée) formant une image de l'individu 1 sur un capteur (non représenté) avec une matrice CMOS de plusieurs millions de pixels. La caméra 12 est ainsi adaptée à acquérir, à une fréquence d'acquisition fₐ prédéterminée, des images de la tête 3 de l'individu 1 avec une résolution suffisante pour pouvoir par exemple détecter l'ouverture et/ou la fermeture des yeux 3 de l'individu 1. On verra dans la suite de la description que la fréquence d'acquisition est ici de 60 Hertz.

De préférence, la source lumineuse 11 émet des flashs infrarouges synchronisés avec la caméra 12 tel un stroboscope), de sorte que le visage de l'individu 1 n'est éclairé que lorsque le système d'acquisition d'images fonctionne.

Aussi, la source lumineuse 11 et la caméra 12 sont pilotées par une unité électronique 13, placée par exemple dans la planche de bord 8 du véhicule automobile 9. Cette unité électronique 13 commande notamment l'émission d'un flash par la source lumineuse 11 et l'acquisition d'une image par la caméra 12.

Afin de comprendre comment l'unité électronique 13 manipule les images acquises par le système d'acquisition d'images 11, 12, on a représenté sur la figure 2 une série de 8 images I1 à I8 acquises par le dispositif 10 à une fréquence d'acquisition de 60 Hz, chaque image I1-I8 étant donc séparée de l'autre de 16 millisecondes environ (1/60^{ème} de seconde). De manière arbitraire, on considérera ici que l'image I1 est acquise à un instant t₁ = 0 ms, l'image I2 à un instant t₂ = 16 ms, etc...

Parmi ces images I1 à I8, on distinguera par la suite :
- les images I1, I3, I5, I7 (premier groupe d'images ou premières images) qui sont de rang impair ; et
- les images I2, I4, I6, I8 (deuxième groupe d'images ou deuxièmes images) qui sont de rang pair.

Ainsi, par exemple, l'image I3 est comprise entre les deux deuxièmes images I2 et I4, et chaque deuxième image I2, I4 est comprise entre les deux premières images I1, I3 et I3, I5 respectivement.

L'unité électronique 13 du dispositif 10 est configurée pour pouvoir traiter et/ou sauvegarder les images 11-18 acquises par la caméra 12 du système d'acquisition d'images.

Plus précisément, l'unité électronique 13 :
- traite, pendant des premiers intervalles de traitement P1, P3, P5, P7 (voir figure 2), les premières images I1, I3, I5, I7 de manière à obtenir une première valeur R1, R3, R5, R7 de l'ouverture moyenne de paupières de l'individu 1 ;
- stocke dans une mémoire (voir blocs S2 et S8) les deuxièmes images I2, I8 pour un traitement ultérieur éventuel ; et
- détecte, par analyse d'au moins une des premières images I1, I3, I5, I7 traitées, si un évènement spécial a eu lieu.

On va maintenant décrire, en suivant la chronologie de la figure 2, un exemple de procédé de détermination de l'individu 1 mis en oeuvre par le dispositif 10 de la figure 1.

Selon l'invention, le procédé comporte tout d'abord l'acquisition d'une première image I1 du conducteur 1. Cette étape est représentée par le bloc A1 de la figure 2. L'acquisition de l'image I1 comprend la capture par le système d'acquisition d'images et le transfert de cette image I1 de la caméra 12 à l'unité électronique 13 du dispositif 10 pour traitement.

Ensuite, cette image I1 est traitée par l'unité électronique 13 qui exécute différents algorithmes d'analyse d'images connus. Cette première étape de traitement est représentée par le bloc P1 de la figure 2 correspondant à un premier intervalle de traitement de l'image I1 qui est ici d'une durée de 20 ms (donc supérieure à l'intervalle entre deux acquisitions, ici entre la première image I1 et la deuxième image I2).

Après traitement de la première image I1, l'unité électronique 13 délivre une première valeur de l'ouverture de la paupière gauche du conducteur 1. Ici, cette première valeur est de 75% et l'unité électronique 13 ne détecte donc aucun événement spécial à partir de l'image I1.

Avantageusement, à l'étape de détection (après traitement d'une première image), on compare cette première valeur de l'indicateur avec une valeur de référence.

Par exemple, pour une fermeture d'oeil, on pourra comparer la première valeur de 75% ci-dessus à une valeur de référence de 5 ou 10%.

Pendant ce premier traitement, la deuxième image I2 est également acquise (voir bloc A2 de la figure 2), puis stockée dans un buffer (bloc S2) de l'unité électronique 13 pour un traitement ultérieur éventuel (voir ci-dessous).

De préférence, le buffer est un buffer circulaire de taille N fixe prédéterminée par l'unité électronique 13. Le buffer permet donc de stocker N images en mémoire selon le principe d'une file de type « *First In First Out* ».

Après stockage de l'image I2, l'image I3 est acquise et traitée par l'unité électronique 13. La valeur R3 de l'ouverture moyenne de la paupière gauche du conducteur 1, qui est ici de 20% indique un clignement d'oeil du conducteur 1. Un événement spécial est donc détecté par l'unité électronique 13.

À cet instant (on est alors près du temps t = 50 ms, voir fig. 2), l'unité électronique 13 procède alors au traitement de la dernière deuxième image I2 précédemment stockée dans le buffer.

Dans un mode de réalisation particulier de l'invention, il est prévu, après détection de l'événement spécial, une étape de sélection d'une ou plusieurs deuxièmes images en fonction de l'événement spécial détecté par l'unité électronique.

En pratique, il s'agira de traiter par exemple au moins la dernière deuxième image acquise et stockée juste avant la première image sur la base de laquelle l'événement spécial a été détecté. En fonction d'une durée caractéristique de l'événement détecté, on peut aussi sélectionner de proche en proche une ou plusieurs deuxièmes images supplémentaires, en traitant l'avant-dernière deuxième image, l'avant-avant-dernière deuxième image, etc...

Par exemple, si l'événement spécial détecté est une fermeture complète de l'oeil, qui a typiquement une durée caractéristique d'environ 50 millisecondes (avec une durée à mi-amplitude d'approximativement 100 à 150 ms), traiter seulement la dernière deuxième image peut suffire à rendre compte de la dynamique de fermeture de l'œil de l'individu.

En revanche, lorsqu'il s'agit t'étudier la dynamique d'un bâillement de l'individu, qui a une durée caractéristique de 5 à 10 secondes, on pourra traiter un grand nombre de deuxièmes images.

Dans certains modes de réalisation, l'étape de sélection peut comprendre la sélection de la deuxième image qui sera acquise juste après la première image sur la base de laquelle l'événement spécial a été détecté.

Enfin, dans un mode de réalisation préféré, l'étape de sélection des deuxièmes images peut également être faite par l'unité électronique 13 sur la base des premières valeurs de l'indicateur de l'état de l'individu 1. En procédant ainsi, on peut savoir plus précisément dans quelle phase de l'événement spécial on se situe (par ex. : phase de fermeture de l'œil lorsque la paupière supérieure descend, ou phase de réouverture de l'œil lorsque la paupière supérieure remonte).

On revient maintenant au cas représenté sur la figure 2 où seule la dernière deuxième image 12 est traitée après détection d'un clignement d'oeil grâce au traitement de la troisième image I3.

Comme l'unité électronique 13 ne peut pas traiter les deux images I2, I3 en même temps, le traitement de la deuxième image I2 est effectué au cours d'un deuxième intervalle de traitement qui est distinct des premiers intervalles de traitement P1, P3.

Le premier intervalle de traitement P3 (durée : 25 ms) de la première image I3 (comme tous les autres premiers intervalles d'ailleurs) étant ici supérieur à la période d'acquisition des images (égale à 16 ms, voir ci-dessus), il n'est pas possible de traiter la deuxième image I2 entre les deux premiers intervalles de traitement P3 et P5 (voir fig. 2)

Avantageusement, il est alors prévu de diviser le deuxième intervalle de traitement en deux sous-intervalles de traitement P21, P22 (voir figure 2) séparés l'un de l'autre par le premier intervalle de traitement P5 de l'image I5. Le premier sous-intervalle de traitement P21 est compris entre les deux premiers intervalles de traitement P3 et P5, alors que le deuxième sous-intervalle de traitement P22 est quant à lui compris entre les deux premiers intervalles de traitement P5 (traitement de la première image I5) et P7 (traitement de la première image I7).

Bien évidemment, en fonction du temps de calcul disponible sur l'unité électronique 13 entre deux premiers intervalles de traitement, le deuxième intervalle de traitement (ou les deuxièmes intervalles de traitement lorsque plusieurs deuxièmes images sont traitées) peut être subdivisé en plus de deux sous-intervalles de traitement.

À l'issue du traitement de la deuxième image I2, c'est-à-dire après de le deuxième sous-intervalle P22, l'unité électronique 13 délivre une deuxième valeur, notée ici R22, de l'ouverture de l'œil gauche de l'individu 1, égale ici à 5%.

Cette deuxième valeur R22 de 5% confirme que la première valeur R3 de 20% de l'ouverture de l'œil gauche était caractéristique d'un clignement d'oeil. Ainsi, l'unité électronique 13 du dispositif 10 détermine que l'individu 1 est dans un état de somnolence. Avantageusement, le dispositif 10 peut communiquer ce résultat à un système d'assistance à la conduite du véhicule automobile 9 pour action corrective, telle qu'émettre une alarme sonore ou suggérer une pause au conducteur.

Avantageusement, et comme cela est représenté sur la figure 2, on peut prévoir que, juste après détection de l'événement spécial (ici après le premier intervalle P3), l'unité électronique 13 désactive l'étape de stockage des deuxièmes images I4, I6 en mémoire (voir bloc S4 et S6 en pointillés). De cette façon, le temps de calcul du processeur de l'unité électronique 13 juste après la détection de l'événement spécial est entièrement consacré à l'analyse d'images (intervalles de traitement P21, P22 et P5).

On peut alors prévoir de reprendre le stockage des deuxièmes images (voir par exemple bloc S8 sur la figure 2) sur la base des premières valeurs (ici R5, R7 par ex.) et de la (ou des) deuxième valeur (ici R22) de l'indicateur.

Lorsque le procédé de la figure 2 est mis en oeuvre avec un dispositif 10 connu avec une unité électronique 13 aux capacités de calcul limitées, il a été mesuré que la puissance supplémentaire de calcul requise par le dispositif 10 était seulement de 15 à 20% supérieur (traitement d'une image sur deux et traitement ponctuel des deuxièmes images si événement spécial détecté), alors qu'un fonctionnement en « mode forcé » avec acquisition et traitement de toutes les premières et deuxièmes images requiert environ 90-95% de puissance supplémentaire.

Ce gain est variable et dépend grandement de la durée et de la fréquence des évènements spéciaux détectés. Toutefois, une partie du gain est aussi due au fait qu'en se reposant sur les deux premières images encadrant la deuxième image considérée, il n'est plus nécessaire d'effectuer certains traitements qui auraient autrement été obligatoires.

## Revendications

1. Procédé de détermination d'un état d'un individu (1), comportant :
- une étape d'acquisition (A1, A2, A3, A4, A5, A6, A7, A8) d'une pluralité d'images (I1, I2, I3, I4, I5, I6, I7, I8) de la tête (2) dudit individu (1), ladite pluralité d'images (I1, I2, I3, I4, I5, I6, I7, I8) comprenant des premières images (I1, I3, I5, I7) et des deuxièmes images (I2, I4, I6, I8) ;
- pendant des premiers intervalles de traitement (P1, P3, P5, P7), une première étape de traitement desdites premières images (I1, I3, I5, I7) de manière à obtenir une première valeur (R1, R3, R5, R7) d'un indicateur représentatif dudit état de l'individu (1) ;
- une étape de stockage en mémoire (S2, S8) desdites deuxièmes images (I2, I8) pour un traitement ultérieur éventuel ;
- une étape de détection d'un évènement spécial par analyse d'au moins une desdites premières images (I1, I3, I5, I7) traitées ;
- à détection dudit événement spécial lors d'un premier intervalle (P3), pendant au moins un deuxième intervalle de traitement formé d'au moins deux sous-intervalles de traitement (P21, P22) séparés l'un de l'autre par au moins un premier intervalle de traitement (P5) postérieur audit premier intervalle (P3) durant lequel l'évènement spécial a été détecté, une deuxième étape de traitement d'au moins une deuxième image (I2) précédemment stockée en mémoire, de manière à obtenir une deuxième valeur (R22) dudit indicateur, ledit au moins un deuxième intervalle de traitement (P21, P22) étant distinct desdits premiers intervalles de traitement (P1, P3, P5, P7) ;
- une étape de détermination dudit état de l'individu (1) à partir de ladite première ou de ladite deuxième valeur (R3, R22) dudit indicateur.

2. Procédé selon la revendication 1, comprenant, après détection dudit événement spécial, une étape de sélection de ladite au moins une deuxième image (I2) en fonction dudit événement spécial détecté.

3. Procédé selon l'une des revendications 1 à 2, selon lequel, juste après détection dudit événement spécial, l'étape de stockage (S4, S6) desdites deuxièmes images (I4, I6) en mémoire est désactivée.

4. Procédé selon l'une des revendications 1 à 3, selon lequel, à l'étape de détection, on compare ladite première valeur (R3) de l'indicateur avec une valeur de référence.

5. Procédé selon l'une des revendications 1 à 4, selon lequel ledit événement spécial correspond :
- à un clignement d'oeil dudit individu ; ou
- à une fermeture ou une ouverture d'oeil dudit individu ; ou
- à une fixation du regard par ledit individu ; ou
- à une direction anormale du regard dudit individu ; ou
- à un bâillement dudit individu ; ou
- des mouvements de lèvres dudit individu

6. Procédé selon l'une des revendications 1 à 5, selon lequel, à l'étape de détermination, on détermine l'état dudit individu (1) comme étant un état de somnolence ou un état de distraction.

7. Procédé selon l'une des revendications 1 à 6, selon lequel, à ladite deuxième étape de traitement, on traite ladite au moins une deuxième image (I2) sur la base de la première image (I1) acquise et traitée juste avant, et de la première image acquise et traitée juste après (I3).

8. Procédé selon l'une des revendications 1 à 7, selon lequel, à l'étape d'acquisition (A1-8), on acquiert ladite pluralité d'images (11-8) à une fréquence d'acquisition supérieure ou égale à 30 hertz (Hz), chaque première image (I3, I5, I7) étant comprise entre deux deuxièmes images (I2, I4, I6, I8) et chaque deuxième image (I2, I4, I6) étant comprise entre deux premières images (I1, I3, I5, I7).

9. Dispositif (10) destiné à déterminer l'état d'un individu (1) à partir du traitement d'images de sa tête (2), comportant :
- un système d'acquisition d'images (11, 12) configuré pour acquérir une pluralité d'images (I1-8) de la tête (2) dudit individu (1), ladite pluralité d'images (11-8) comprenant des premières images (I1, I3, I5, I7) et des deuxièmes images (I2, I4, I6, I8) ;
- une unité électronique (13) adaptée à :
- traiter, pendant des premiers intervalles de traitement (P1, P3, P5, P7), lesdites premières images (I1, I3, I5, I7) de manière à obtenir une première valeur (R1, R3, R5, R7) d'un indicateur représentatif dudit état de l'individu (1) ;
- stocker dans une mémoire (S2, S8) lesdites deuxièmes images (I2, I8) pour un traitement ultérieur éventuel ; et
- détecter, par analyse d'au moins une desdites premières images (I1, I3, I5, I7) traitées, si un évènement spécial a eu lieu ; ledit dispositif (10) étant **caractérisé en ce que** ladite unité électronique (13) est également conçue pour :
- traiter, à détection dudit événement spécial lors d'un premier intervalle (P3) et pendant au moins un deuxième intervalle de traitement formé d'au moins deux sous-intervalles de traitement (P21, P22) séparés l'un de l'autre par au moins un premier intervalle de traitement (P5) postérieur audit premier intervalle (P3) durant lequel l'évènement spécial a été détecté, au moins une deuxième image (I2) précédemment stockée en mémoire (S2), de manière à obtenir une deuxième valeur (R22) dudit indicateur, ledit au moins un deuxième intervalle de traitement (P21, P22) étant distinct desdits premiers intervalles de traitement (P1, P3, P5, P7) ; et
- déterminer ledit état de l'individu à partir de ladite première ou de ladite deuxième valeur (R3, R22) dudit indicateur.

## Patentansprüche

1. Verfahren zur Bestimmung des Zustands einer Person (1), das aufweist:
- einen Schritt der Erfassung (A1, A2, A3, A4, A5, A6, A7, A8) einer Vielzahl von Bildern (I1, I2, I3, I4, I5, I6, I7, I8) des Kopfes (2) der Person (1), wobei die Vielzahl von Bildern (I1, I2, I3, I4, I5, I6, I7, I8) erste Bilder (I1, I3, I5, I7) und zweite Bilder (I2, I4, I6, I8) enthält;
- während erster Verarbeitungsintervalle (P1, P3, P5, P7) einen ersten Verarbeitungsschritt der ersten Bilder (I1, I3, I5, I7), um einen ersten Wert (R1, R3, R5, R7) eines Indikators zu erhalten, der für den Zustand der Person (1) repräsentativ ist;
- einen Schritt des Speicherns der zweiten Bilder (I2, I8) in einem Speicher (S2, S8) für eine mögliche spätere Verarbeitung;
- einen Schritt der Erkennung eines speziellen Ereignisses durch Analyse mindestens eines der ersten verarbeiteten Bilder (I1, I3, I5, I7);
- bei Erkennung des speziellen Ereignisses in einem ersten Intervall (P3), während mindestens eines zweiten Verarbeitungsintervalls, das von mindestens zwei Verarbeitungsteilintervallen (P21, P22) gebildet wird, die durch mindestens ein erstes Verarbeitungsintervall (P5) nach dem ersten Intervall (P3) voneinander getrennt sind, während dessen das spezielle Ereignis erkannt wurde, einen zweiten Verarbeitungsschritt mindestens eines zweiten Bilds (I2), das vorher im Speicher gespeichert wurde, um einen zweiten Wert (R22) des Indikators zu erhalten, wobei das mindestens eine zweite Verarbeitungsintervall (P21, P22) sich von den ersten Verarbeitungsintervallen (P1, P3, P5, P7) unterscheidet;
- einen Schritt der Bestimmung des Zustands der Person (1) ausgehend vom ersten oder vom zweiten Wert (R3, R22) des Indikators.

2. Verfahren nach Anspruch 1, das nach Erkennung des speziellen Ereignisses einen Schritt der Auswahl des mindestens einen zweiten Bilds (I2) abhängig vom erkannten speziellen Ereignis enthält.

3. Verfahren nach einem der Ansprüche 1 bis 2, wobei der Schritt des Speicherns (S4, S6) der zweiten Bilder (I4, I6) im Speicher gleich nach der Erkennung des speziellen Ereignisses deaktiviert wird.

4. Verfahren nach einem der Ansprüche 1 bis 3, wobei im Schritt der Erkennung der erste Wert (R3) des Indikators mit einem Bezugswert verglichen wird.

5. Verfahren nach einem der Ansprüche 1 bis 4, wobei das spezielle Ereignis entspricht:
- einem Blinzeln der Person; oder
- einem Schließen oder Öffnen des Auges der Person; oder
- einem Fixieren des Blicks durch die Person; oder
- einer unnormalen Richtung des Blicks der Person; oder
- einem Gähnen der Person; oder
- Lippenbewegungen der Person.

6. Verfahren nach einem der Ansprüche 1 bis 5, wobei im Bestimmungsschritt der Zustand der Person (1) als ein Zustand der Schläfrigkeit oder ein Zustand der Zerstreutheit bestimmt wird.

7. Verfahren nach einem der Ansprüche 1 bis 6, wobei im zweiten Verarbeitungsschritt das mindestens eine zweite Bild (I2) auf der Basis des gleich davor erfassten und verarbeiteten ersten Bilds (I1) und des gleich danach erfassten und verarbeiteten ersten Bilds (I3) verarbeitet wird.

8. Verfahren nach einem der Ansprüche 1 bis 7, wobei im Erfassungsschritt (A1-8) die Vielzahl von Bildern (I1-8) mit einer Erfassungsfrequenz höher als oder gleich 30 Hertz (Hz) erfasst wird, wobei jedes erste Bild (I3, I5, I7) zwischen zwei zweiten Bildern (I2, I4, I6, I8) enthalten ist und jedes zweite Bild (I2, I4, I6) zwischen zwei ersten Bildern (I1, I3, I5, I7) enthalten ist.

9. Vorrichtung (10), die dazu bestimmt ist, den Zustand einer Person (1) ausgehend von der Verarbeitung von Bildern ihres Kopfes (2) zu bestimmen, die aufweist:
- ein System zur Erfassung von Bildern (I1, I2), das konfiguriert ist, eine Vielzahl von Bildern (I1-8) des Kopfes (2) der Person (1) zu erfassen, wobei die Vielzahl von Bildern (I1-8) erste Bilder (I1, I3, I5, I7) und zweite Bilder (I2, I4, I6, I8) enthält;
- eine elektronische Einheit (13), die geeignet ist:
- während erster Verarbeitungsintervalle (P1, P3, P5, P7) die ersten Bilder (I1, I3, I5, I7) zu verarbeiten, um einen ersten Wert (R1, R3, R5, R7) eines Indikators zu erhalten, der für den Zustand der Person (1) repräsentativ ist;
- die zweiten Bilder (I2, I8) in einem Speicher für eine mögliche spätere Verarbeitung zu speichern (S2, S8); und
- durch Analyse mindestens eines der verarbeiteten ersten Bilder (I1, I3, I5, I7) zu erkennen, ob ein spezielles Ereignis stattgefunden hat;
wobei die Vorrichtung (10) **dadurch gekennzeichnet ist, dass** die elektronische Einheit (13) ebenfalls konzipiert ist, um:
- bei Erkennung des speziellen Ereignisses in einem ersten Intervall (P3) und während mindestens eines zweiten Verarbeitungsintervalls, das von mindestens zwei Verarbeitungsteilintervallen (P21, P22) gebildet wird, die durch mindestens ein erstes Verarbeitungsintervall (P5) nach dem ersten Intervall (P3) voneinander getrennt sind, während dessen das spezielle Ereignis erkannt wurde, mindestens ein zweites Bild (I2) zu verarbeiten, das vorher im Speicher (S2) gespeichert wurde, um einen zweiten Wert (R22) des Indikators zu erhalten, wobei das mindestens eine zweite Verarbeitungsintervall (P21, P22) sich von den ersten Verarbeitungsintervallen (P1, P3, P5, P7) unterscheidet; und
- den Zustand der Person ausgehend vom ersten oder vom zweiten Wert (R3, R22) des Indikators zu bestimmen.

## Claims

1. Method for determining a state of an individual (1), comprising:
- a step (A1, A2, A3, A4, A5, A6, A7, A8) of acquiring a plurality of images (I1, I2, I3, I4, I5, I6, I7, I8) of the head (2) of said individual (1), said plurality of images (I1, I2, I3, I4, I5, I6, I7, I8) comprising first images (I1, I3, I5, I7) and second images (I2, I4, I6, I8);
- during first processing intervals (P1, P3, P5, P7), a first step of processing said first images (I1, I3, I5, I7) so as to obtain a first value (R1, R3, R5, R7) of an indicator which is representative of said state of the individual (1);
- a step of storing said second images (I2, I8) in memory (S2, S8) for possible subsequent processing;
- a step of detecting a special event by analysing at least one of said processed first images (I1, I3, I5, I7);
- upon detecting said special event during a first interval (P3), during at least one second processing interval formed of at least two processing sub-intervals (P21, P22) separated from one another by at least one first processing interval (P5) which is later than said first interval (P3) during which the special event was detected, a second step of processing at least one second image (I2) previously stored in memory, so as to obtain a second value (R22) of said indicator, said at least one second processing interval (P21, P22) being distinct from said first processing intervals (P1, P3, P5, P7);
- a step of determining said state of the individual (1) on the basis of said first or of said second value (R3, R22) of said indicator.

2. Method according to Claim 1, comprising, after detecting said special event, a step of selecting said at least one second image (I2) depending on said detected special event.

3. Method according to one of Claims 1 and 2, according to which, just after detecting said special event, the step of storing said second images (I4, I6) in memory (S4, S6) is deactivated.

4. Method according to one of Claims 1 to 3, according to which, in the detection step, said first value (R3) of the indicator is compared with a reference value.

5. Method according to one of Claims 1 to 4, according to which said special event corresponds:
- to said individual blinking; or
- to said individual closing or opening their eyes; or
- to said individual fixing their gaze; or
- to said individual directing their gaze abnormally; or
- to said individual yawning; or
- to said individual moving their lips.

6. Method according to one of Claims 1 to 5, according to which, in the determination step, the state of said individual (1) is determined as being a state of drowsiness or a state of distraction.

7. Method according to one of Claims 1 to 6, according to which, in said second processing step, said at least one second image (I2) is processed on the basis of the first image (I1) acquired and processed just beforehand, and of the first image (I3) acquired and processed just afterwards.

8. Method according to one of Claims 1 to 7, according to which, in the acquisition step (A1-8), said plurality of images (I1-8) is acquired at an acquisition frequency which is greater than or equal to 30 hertz (Hz), each first image (I3, I5, I7) being comprised between two second images (I2, I4, I6, I8) and each second image (I2, I4, I6) being comprised between two first images (I1, I3, I5, I7).

9. Device (10) intended to determine the state of an individual (1) on the basis of processing images of their head (2), comprising:
- an image acquisition system (11, 12) configured to acquire a plurality of images (I1-8) of the head (2) of said individual (1), said plurality of images (I1-8) comprising first images (I1, I3, I5, I7) and second images (I2, I4, I6, I8);
- an electronic unit (13) suited to:
- processing, during first processing intervals (P1, P3, P5, P7), said first images (I1, I3, I5, I7) so as to obtain a first value (R1, R3, R5, R7) of an indicator which is representative of said state of the individual (1);
- storing said second images (I2, I8) in a memory (S2, S8) for possible subsequent processing; and
- detecting, by analysing at least one of said processed first images (I1, I3, I5, I7), whether a special event has taken place;
said device (10) being **characterized in that** said electronic unit (13) is also designed to:
- process, upon detecting said special event during a first interval (P3) and during at least one second processing interval formed of at least two processing sub-intervals (P21, P22) separated from one another by at least one first processing interval (P5) which is later than said first interval (P3) during which the special event was detected, at least one second image (I2) previously stored in memory (S2), so as to obtain a second value (R22) of said indicator, said at least one second processing interval (P21, P22) being distinct from said first processing intervals (P1, P3, P5, P7); and
- determine said state of the individual on the basis of said first or of said second value (R3, R22) of said indicator.
